# EUROPÄISCHE PATENTSCHRIFT

(11) **EP 2 089 641 B1**
(45) Veröffentlichungstag und Bekanntmachung des Hinweises auf die Patenterteilung: **31.08.2011**
(21) Anmeldenummer: 07819039.4
(22) Anmeldetag: 16.10.2007
(51) Int. Cl.: F16H 3/72, F16H 59/16

(54) **STUFENLOSER FAHRZEUGANTRIEB**
CONTINUOUSLY VARIABLE VEHICLE DRIVE
ENTRAÎNEMENT DE VÉHICULE À VARIATION CONTINUE

(30) Priorität: 09.11.2006 DE 102006052864
(43) Veröffentlichungstag der Anmeldung: 19.08.2009
(73) Patentinhaber: Denteler Präzisionsteile Gmbh, 86738 Deningen (DE)
(72) Erfinder: DENTELER, Brigitte, 86720 Nördlingen (DE)
(74) Vertreter: Oberdorfer, Jürgen
(86) Internationale Anmeldenummer: PCT/EP2007/008971
(87) Internationale Veröffentlichungsnummer: WO 2008/055580

(56) Entgegenhaltungen:
- EP-A- 0 925 981
- EP-A- 1 413 801
- EP-B1- 0 329 741
- DE-A1- 4 124 479
- DE-B- 1 017 696
- FR-A- 2 774 040
- GB-A- 2 405 129
- US-A- 5 513 719

## Beschreibung

Die vorliegende Erfindung betrifft einen stufenlosen Fahrzeugantrieb, in dem das Drehmoment eines Torquemotors über ein Planetengetriebe mit einem Antriebsmoment aus einem Verbrennungsmotor kombinierbar ist und ein Verfahren für den Betrieb des stufenlosen Fahrzeugantriebs.

Die Berücksichtigung von Umweltbelastung und Energieeinsparung steht bei der Entwicklung heutiger Kraftfahrzeugantriebe immer mehr im Vordergrund. Gerade bei Fahrstrecken mit hohem Stadtverkehrsanteil und einer großen Häufigkeit von Anfahrvorgängen und Bremsvorgängen können die Emissionen erheblich durch den Einsatz von Hybridantrieben gesenkt werden. Bei solchen Hybridantrieben des Standes der Technik werden z.B. die Antriebsmomente von Elektromotoren und Verbrennungsmotoren kombiniert. Vorteile der Kombinierung von Verbrennungs- und Elektromotoren liegen ferner in der Minderung der Schaltstöße beim Wechseln der Gänge durch das dem Verbrennungsmotor zugeordnete Schaltgetriebe.

In der DE 196 50 723 A1 wird ein Hybridantrieb beschrieben, der ein Planetengetriebe und einen zusätzlichen antreibenden und bremsenden Motorgenerator umfasst.

In der DE 102 28 636 A1 wird eine Kraftübertragungsvorrichtung für ein Hybridfahrzeug und ein Verfahren zum Steuern der Vorrichtung beschrieben, wobei die Kraftübertragungsvorrichtung zwei Antriebsmittel, nämlich eine Maschine und einen Motorgenerator beinhaltet. Es ist ein Planetengetriebe mit Sonnenrad, Träger und Hohlrad vorhanden. Der Rotor des Motorgenerators ist mit dem Sonnenrad verbunden.

Bei diesen Antrieben des Standes der Technik kann die Drehzahl nicht stufenlos verstellt werden.

Die DE 1 017 696 offenbart eine Anordnung zur ununterbrochenen Regulierung der Geschwindigkeit des Moments einer getriebenen Welle, bei der eine Kraftübertragung von Gleichstrommaschinen auf eine Motorwelle eines Fahrzeugs und umgekehrt mittels eines Planetengetriebes ermöglicht wird. Mit einer derartigen Ordnung soll es möglich sein, den Übergang vom Generatorbetrieb, bei dem die Welle durch einen Generator angetrieben wird, auf den Motorbetrieb, bei dem die Welle durch den Motor des Fahrzeugs angetrieben wird, und umgekehrt vollkommen kontinuierlich und selbstständig zu ermöglichen.

In der DE 699 30 498 T2 wird eine Hybridantriebseinheit offenbart, bei der eine Entkopplung eines elektrischen Motors von der mechanischen Verbindung mit den Rädern des Fahrzeugs ermöglicht wird. Hierzu umfasst die Hybridantriebseinheit zwei Planetenradsätze, die so miteinander verbunden sind, dass die Entkopplung ermöglicht wird.

Die EP 0 329 741 B1 offenbart einen gattungsbilderades Antrieb, bei dem ein Servomotor und ein Antriebsmotor mittels eines Planetengetriebes so mit einer Abtriebswelle verbunden werden, dass eine stufenlos regelbare Drehzahl der Abtriebswelle ermöglicht wird. Der Antriebsmotor ist hierzu mit dem Sonnenrad, der Servomotor mit dem Zahnkranz und die Abtriebswelle mit dem Planetenträger des Planetengetriebes verbunden.

Aufgabe der vorliegenden Erfindung ist es daher einen stufenlosen Fahrzeugantrieb zur Verfügung zu stellen, der es ermöglicht, das Drehmoment eines Torquemotors mit dem Antriebsmoment, das von einem Verbrennungsmotor erzeugt und zugeführt wird, zu kombinieren und bei einem guten Antriebswirkungsgrad sowie einer hohen Antriebsdynamik Drehmomentschwankungen des zugeführten Drehmomentes ausgleichen zu können.

Diese Aufgabe wird durch einen stufenlosen Fahrzeugantrieb mit den Merkmalen des Anspruchs 1 gelöst. Weitere vorteilhafte Ausgestaltungen sind in den abhängigen Ansprüchen angegeben.

Insbesondere wird die Aufgabe durch einen stufenlosen Fahrzeugantrieb gelöst, umfassend ein Planetengetriebe, das zumindest ein Sonnenrad, einen Planetenträger, ein Außenrad und Planetenräder enthält, einen Torquemotor, der ein treibendes Drehmoment und ein bremsendes Drehmoment aus zugeführter Elektrizität erzeugen kann, eine Motorwelle, die zum Zuführen eines Antriebsdrehmoments dient, eine Abtriebswelle, die zur Kraftübertragung an nachgeschaltete Aggregate dient, einen Drehzahlabnehmer, der die Drehzahl der Abtriebswelle und/oder der Planetenräder, ihre Achse, gegebenenfalls indirekt durch Messung der Antriebswellendrehzahl erfasst und eine Steuerung, die von dem Drehzahlabnehmer Signale erhält und die den Torquemotor steuert, wobei die Abtriebswelle mit dem Planetenträgger verbunden ist, die Motorwelle mit dem Sonnenrad verbunden ist und der Torquemotor zur Drehmomentübertragung mit dem Außenrad gekoppelt ist.

Die Motorwelle treibt über das Sonnenrad das Planetengetriebe an. Die Planetenräder drehen sich dabei um ihre eigene Achse und treiben das Außenrad an. Das Außenrad ist bevorzugt innen und außen verzahnt und dreht sich synchron mit der Abtriebswelle des Torquemotors. Der Torquemotor wird von der Steuerung bevorzugt genau auf der Drehzahl gehalten, die erforderlich ist, damit sich die Planetenräder nur um die eigene Achse drehen. Wird an der Abtriebswelle des Torquemotors die Drehzahl reduziert, dann drehen sich die Planetenräder um das Sonnenrad und an der Abtriebswelle des Planetengetriebes entsteht ein Drehmoment. Die Drehzahl am Torquemotor kann bis auf Null verringert werden. Je geringer die Drehzahl am Torquemotor ist, desto größer ist die Drehzahl an der Abtriebswelle des Planetengetriebes.

In einer bevorzugten Ausführungsform ist der Torquemotor aus einem Gehäuse mit einer aktiven Spulenanordnung gebildet, wobei das Gehäuse als Stator wirkt und das Außenrad des Planetengetriebes umgebend angeordnet ist. Bei dieser Ausführungsform ist das Außenrad umfänglich mit einer Dauermagnetanordnung ausgestattet und wirkt als Rotor des Torquemotors. Es ist von besonderem Vorteil, dass eine weitere Reduzierung der erforderlichen Anzahl an Bauteilen erreichbar ist und zudem eine Verzahnung zwischen einem Ritzel eines Torquemotors und einer Außenverzahnung des Außenrades eingespart werden kann und somit ein leiserer Lauf erreichbar ist. Ein weiterer Vorteil ist, dass bei dieser Ausführungsform der Torquemotor ohne Übersetzung mit dem Außenrad zusammenwirkt und somit der Torquemotor in gebräuchlicheren Drehzahlen für einen Torquemotor betrieben werden kann. Beispielsweise ist im erfindungsgemäß dargestellten Ausführungsbeispiel die maximal auftretende Torquemotordrehzahl genauso groß wie die Abtriebsdrehzahl. Bei dieser Ausführungsform wird insbesondere das hohe Brems- und/oder Abtriebsmoment eines Torquemotors in besonders vorteilhafter Weise genutzt.

Weiterhin kann selbstverständlich der erfindungsgemäße Fahrzeugantrieb abtriebsseitig mit einer Motor-/Generatoreinrichtung versehen sein, mittels der überschüssige Abtriebsenergie z. B. Bremsenergie einem elektrischen Speicher, z. B. einer Batterie zugeführt wird und umgekehrt bei Bedarf Antriebsenergie aus dem Speicher entnommen und mittels der Motoreinrichtung der Abtriebswelle zugeführt werden kann.

Die Erfindung betrifft ferner ein Verfahren zum Betreiben des stufenlosen Fahrzeugantriebs. Das Verfahren umfasst folgende Schritte:
Wenn das Fahrzeug steht, ist die Abtriebswelle am Planetengetriebe blockiert, so dass sich die Planetenräder nur um ihre eigene Achse, aber nicht um das Sonnenrad drehen. Der Motor des Fahrzeugs treibt über die Motorwelle parallel das Sonnenrad des Planetengetriebes und den Generator an. Somit wird das gesamte Drehmoment über das Außenrad an den Torquemotor übertragen bzw. wird im Generator umgesetzt. Durch den mechanischen Abtrieb über das Außenrad des Planetengetriebes und eine elektrische Steuerung des Torquemotors ist die Drehzahl des Torquemotors synchron mit der Abtriebswelle.

Beim Anfahren wird die Blockierung der Abtriebswelle gelöst, wobei beim Lösen die Drehzahl des Torquemotors so eingestellt ist, dass das Drehmoment an der Abtriebswelle des Planetengetriebes Null oder näherungsweise Null ist.

Durch die nun folgende Reduzierung der Drehzahl des Torquemotors im Fahrbetrieb, drehen sich die Planetenräder um das Sonnenrad und an der Abtriebswelle des Planetengetriebes wird mit fallender Drehzahl des Torquemotors ein ansteigendes Drehmoment erzeugt und durch Variieren der Drehzahl des Torquemotors wird eine gewünschte Antriebsdrehzahl oder ein gewünschtes Antriebsdrehmoment erzeugt. Die Geschwindigkeit des Fahrzeugs wird somit komplett über die Drehzahl des Torquemotors gesteuert. Je geringer die Drehzahl am Torquemotor ist, desto schneller fährt das Fahrzeug. Die Endgeschwindigkeit des Fahrzeugs wird erreicht, wenn die Abtriebswelle des Torquemotors still steht.

### Kurzbeschreibung der Figuren

Im Folgenden sollen weitere vorteilhafte Ausgestaltungen der Erfindung an Hand der Figuren beispielhaft erläutert werden. Hierbei zeigen:
- Fig. 1:: eine erste Ausführungsform eines erfindungsgemäßen stufenlosen Fahrzeugantriebs in schematischer Dar- stellung;
- Fig. 2:: eine Darstellung des Verlaufes der Drehzahl des Tor- quemotors m in Abhängigkeit von der Drehzahl der Ab- triebswelle n bei einer Drehzahl der Motorwelle e von 3000 (1/min) bei einem erfindungsgemäßen stufenlosen Fahrzeugantriebs;
- Fig. 3:: eine Darstellung des Verlaufs des Drehmoments des Torquemotors M_{T} in Abhängigkeit von dem Drehmoment an der Abtriebswelle M_{A} bei einem erfindungsgemäßen stu- fenlosen Fahrzeugantrieb;
- Fig. 4:: Einen Direktantrieb für rotierende Achsen 21 zum Ein- satz in einem erfindungsgemäßen stufenlosen Fahrzeug- antrieb 1 in einer schematischen Schnittansicht;
- Figur 5:: eine zweite Ausführungsform eines erfindungsgemäßen stufenlosen Fahrzeugantriebs in schematischer Dar- stellung;

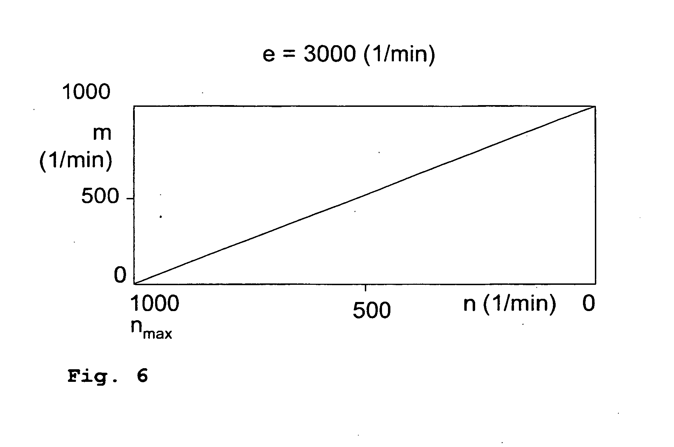

- Figur 6:: eine Darstellung des Verlaufs der Drehzahl des Tor- quemotors m in Abhängigkeit von der Drehzahl der Ab- triebswelle n bei einer Drehzahl der Motorwelle e von 3000 (1/m) bei der zweiten Ausführungsform des erfin- dungsgemäßen stufenlosen Fahrzeugantriebs.

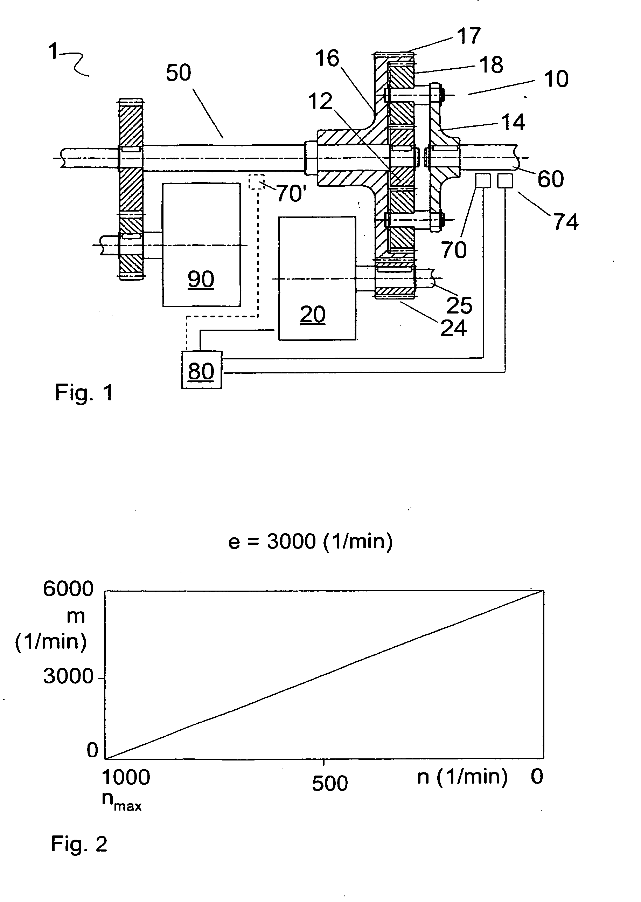

Bei einem erfindungsgemäßen stufenlosen Fahrzeugantrieb 1 gemäß Fig. 1 ist eine Motorwelle 50 mit einem Sonnenrad 12 eines Planetengetriebes 10 verbunden. Um das Sonnenrad 12 herum sind Planetenräder 18 angeordnet, die von einem Planetenträger 14 gehalten werden und die mit dem Sonnenrad 12 kämmen. Die Planetenräder 18 kämmen mit einem innen verzahnten Außenrad 16. Das Außenrad 16 weist eine Außenverzahnung 17 auf, mit der das Außenrad 16 mit einem Ritzel 24 auf einer Antriebswelle 25 eines Torquemotors 20 kämmt. Ein Generator 90 wird über die Motorwelle 50 angetrieben und erzeugt Elektrizität, die zum Antreiben des Toquemotors 20 verwendet wird. Ein Drehmomentsensor 74 erfasst das Drehmoment M_{A} an der Abtriebswelle 60 und ist mit einer Steuerung 80 verbunden. Ein Drehzahlabnehmer 70 erfasst die Drehzahl n an der Abtriebswelle 60 und ist mit der Steuerung 80 verbunden. Ergänzend oder alternativ kann ein Drehzahlabnehmer 70' vorhanden sein, der eine Drehzahl an der Antriebswelle 50 erfasst und mit der Steuerung 80 verbunden ist.

Die Motorwelle 50 treibt über das Sonnenrad 12 das Planetengetriebe 10 an. Die Planetenräder 18 drehen sich dabei um ihre eigene Achse und treiben gleichzeitig das Außenrad 16 an. Das Außenrad 16 dreht sich dabei synchron mit dem Ritzel der Abtriebswelle 24 des Torquemotors 20. Der Torquemotor 20 wird dabei von der Steuerung 80 auf einer bestimmten Drehzahl gehalten, so dass sich die Planetenräder 18 nur um ihre eigene Achse drehen. Wird an der Abtriebswelle 25 des Torquemotors 20 die Drehzahl m reduziert, drehen sich die Planetenräder 18 um das Sonnenrad 12 und an der Abtriebswelle 60 des Plantetengetriebes 10 entsteht ein Drehmoment M_{T}. Die Drehzahl m des Torquemotors 20 kann bis auf Null reduziert werden. Je geringer die Drehzahl m am Torquemotor 20, desto größer wird die Drehzahl n an der Abtriebswelle 60 des Planetengetriebes 10.

Fig. 2 zeigt eine beispielhafte Darstellung des Verlaufes der Drehzahl m des Torquemotors 20 in Abhängigkeit von der Drehzahl n der Abtriebswelle 60 bei einer Drehzahl der Motorwelle e von 3000 (1/min) bei einem erfindungsgemäßen stufenlosen Fahrzeugantrieb 1. Die Drehzahl n an der Abtriebswelle 60 ist auf der Abszisse und die Drehzahl m des Torquemotors 20 ist auf der Ordinate aufgetragen.

Es besteht ein im Wesentlichen linearer Zusammenhang zwischen der Drehzahl n an der Abtriebswelle 60 und der Drehzahl m des Torquemotors 20. Ist die Drehzahl m des Torquemotors 20 gleich Null, ist die Drehzahl n an der Abtriebswelle 60 maximal nₘₐₓ, hier 1000 (1/min). Bei einer Drehzahl m des Torquemotors 20 von 6000 (1/min) wird die Drehzahl n an der Abtriebswelle 60 gleich Null.

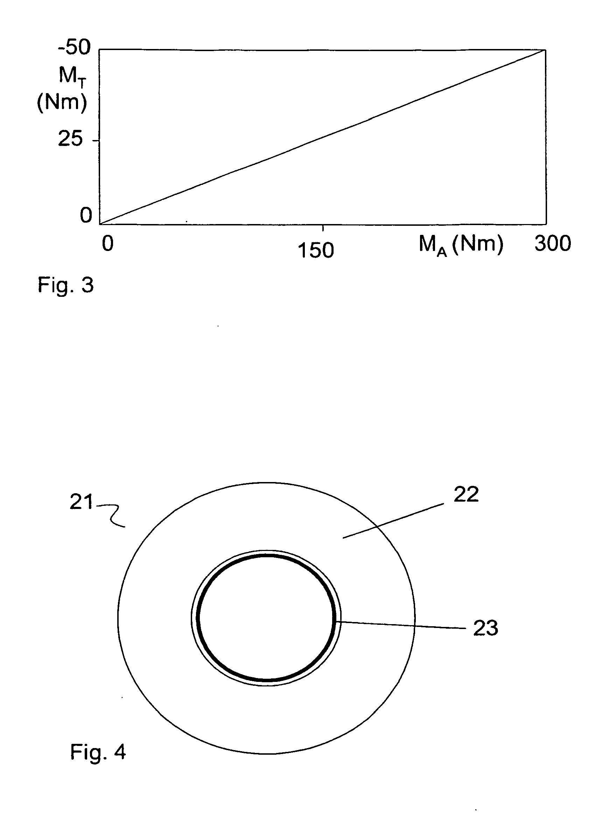

Fig. 3 zeigt eine Darstellung des Verlaufs des Drehmoments M_{T} des Torquemotors 20 in Abhängigkeit von dem Drehmoment M_{A} an der Abtriebswelle 60 bei einem erfindungsgemäßen stufenlosen Fahrzeugantrieb 1. Das Drehmoment M_{A} an der Abtriebswelle 60 ist auf der Abszisse aufgetragen und das Drehmoment M_{T} des Torquemotors 20 ist auf der Ordinate aufgetragen.

Es ist ein im Wesentlichen linearer Zusammenhang zwischen dem Drehmoment M_{A} an der Abtriebswelle 60 und dem Drehmoment M_{T} des Torquemotors 20 zu erkennen. Wenn das Drehmoment M_{A} an der Abtriebswelle 60 gleich Null ist, ist das Drehmoment M_{T} des Torquemotors 20 ebenfalls gleich Null. Erreicht das Drehmoment M_{A} an der Abtriebswelle 60 einen Wert von 300 Nm, beträgt hier das Abstützmoment M_{T} am Torquemotor -50 Nm.

Fig. 4 zeigt eine schematische Schnittzeichnung eines Direktantriebes für rotierende Achsen 21 für den Einsatz als Torquemotor 20 in einem erfindungsgemäßen stufenlosen Fahrzeugantrieb 1. Der Direktantrieb 21 für rotierende Achsen weist einen Stator 22 mit aktivem Spulensystem 27 und einen darin innerhalb angeordneten, als Ring ausgebildeten Rotor 23 mit Dauermagnetanordnung 28 auf.

Mittels des aktiven Stators 22 kann die Drehzahl des Torquemotors 20 stufenlos geregelt werden. Im Stilltand und in niedrigen Drehzahlbereichen kann der Direktantrieb 21 für rotierende Achsen ebenso das volle Drehmoment entwickeln wie in höheren Drehzahlbereichen. Damit vereint der Direktantrieb 21 für rotierende Achsen die Vorteile von Schrittmotoren und Gleichstrommotoren. Eine solche Synchronmaschine mit Permanentmagneten ist als Torquemotor in Sinne der Erfindung zu verstehen.

Eine zweite Ausführungsform des erfindungsgemäßen stufenlosen Fahrzeugantriebs 1 ermöglicht es, den Torquemotor als separates Bauteil bzw. als separaten Bestandteil einzusparen. Erreicht wird das dadurch, dass der Torquemotor 20 ein Gehäuse 26 besitzt, welches das Außenrad 16 umgebend angeordnet ist.

An geeigneter Stelle weist das Gehäuse 26, welches als Stator wirkt, ein aktives Spulensystem 27 bzw. eine aktive Spulenanordnung 27 auf, welche mit einer Dauermagnetanordnung 28 auf einer Außenseite 29 des Außenrades 16 zusammenwirkt. Die Dauermagnetanordnung 28 sitzt anstelle der Außenverzahnung 17 auf dem Außenrad 16 und ist mit diesem verbunden. Das Gehäuse 26 trägt die aktive Spulenanordnung 27 zur Dauermagnetanordnung 28 und bildet zusammen mit dem als Rotor dienenden Außenrad 16 den Torquemotor 20. Diese Ausführungsform bietet eine besonders hohe Bauteil- bzw. Funktionsdichte, da das Außenrad 16 sowohl als Außenrad für das Planetengetriebe 10 als auch als Rotor 23 des Torquemotors 20 und somit auch als Träger für die Dauermagnetanordnung 28 dient. Somit ist eine hohe Kompaktheit des erfindungsgemäßen Fahrzeugantriebs 1 gegeben. Weiterhin wird bei dieser Ausführungsform die Verzahnung zwischen einem Ritzel des Torquemotors 20 und der Außenverzahnung des Außenrades 17 überflüssig, so dass auch ein leiserer und insbesondere verschleißarmer Betrieb möglich wird.

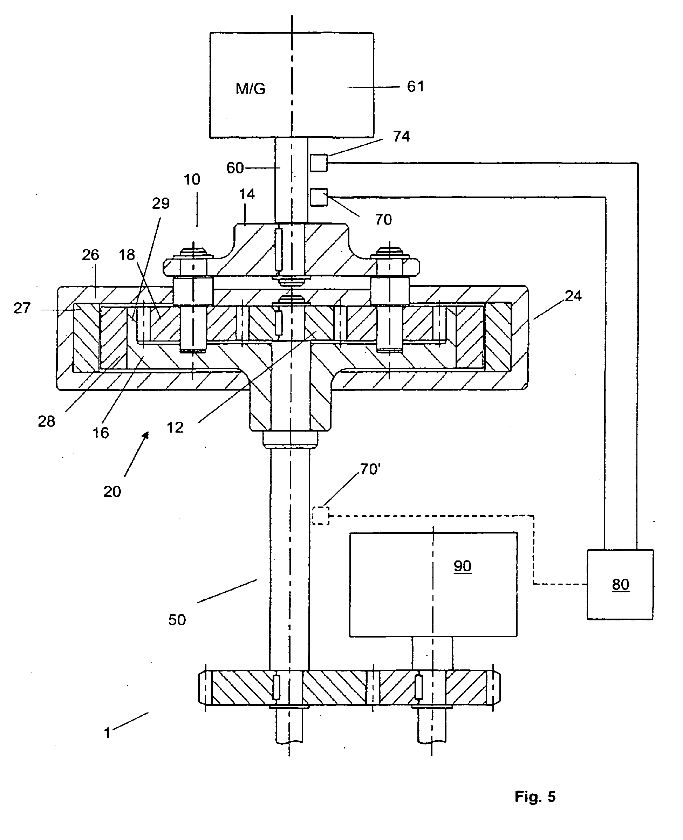

Gegegebenenfalls ist es sowohl bei der Ausführungsform nach Figur 5 als auch bei den vorbeschriebenen Ausführungsformen zweckmäßig, mit der Abtriebswelle 60 eine Motor-/Generatoreinrichtung 61 zu koppeln, welche im Bedarfsfalle. überschüssige Energie z. B. Bremsenergie einem Speicher, z. B. einem elektrischen Speicher (nicht gezeigt) zuleitet. Bei Bedarf kann elektrische Energie aus dem Speicher (nicht gezeigt) durch die Motor-/Generatoreinrichtung 61 der Abtriebswelle 60 wieder zugeführt werden.

Durch den erfindungsgemäßen stufenlosen Fahrzeugantrieb kann ein stufenloser Antrieb vom Stand bis zur Endgeschwindigkeit realisiert werden. Es besteht ferner kein Schlupf und kein Kraftverlust. Der Aufbau des Systems ist kompakt und einfach.

### Bezugszeichenliste

- 1: Stufenloser Fahrzeugantrieb

- 10: Planetengetriebe
- 12: Sonnenrad
- 14: Planetenträger
- 16: Außenrad
- 17: Außenverzahnung des Außenrades
- 18: Planetenräder

- 20: Torquemotor, Synchronmotor mit Permanentmagneten
- 21: Direktantrieb für rotierende Achsen
- 22: Stator mit aktivem Spulensystem
- 23: Rotor mit Dauermagnetsystem
- 24: Abtriebswelle des Torquemotors
- 25: Abtriebswelle
- 26: Gehäuse
- 27: aktives Spulensystem bzw. aktive Spulenanordnung
- 28: Dauermagnetanordnung
- 29: Außenseite des Außenrades
- 50: Motorwelle
- 60: Abtriebswelle
- 61: Generatoren-/Motoreneinrichtung
- 70: Drehzahlabnehmer
- 70': Drehzahlabnehmer
- 74: Drehmomentsensor
- 80: Steuerung
- 90: Generator
- M_{A}: Drehmoment an der Abtriebswelle
- M_{P}: Drehmoment an den Planetenrädern
- M_{T}: Drehmoment am Torquemotor
- n: Drehzahl an der Abtriebswelle
- nₘₐₓ: maximale Drehzahl an der Abtriebswelle

## Patentansprüche

1. Stufenloser Fahrzeugantrieb, umfassend ein Planetengetriebe (10), das zumindest ein Sonnenrad (12), einen Planetenträger (14), ein Außenrad (16) und Planetenräder (18) enthält, einen Elektromotor (20), der ein treibendes Drehmoment und ein bremsendes Drehmoment aus zugeführter Elektrizität erzeugen kann, eine Motorwelle (50), die zum Zuführen eines Antriebsdrehmoments dient, eine Abtriebswelle (60), die zur Kraftübertragung an nachgeschaltete Aggregate dient, wobei die Abtriebswelle (60) mit dem Planetenträger (14) und die Motorwelle (50) mit dem Sonnenrad (12) verbunden ist und der Elektromotor (20) zur Drehmomentübertragung mit dem Außenrad (16) gekoppelt ist, wobei der Elektromotor als Torquemotor ausgebildet ist und der stufenlose Fahrzeugantrieb des Weiteren einen Drehzahlabnehmer (70, 70'), der die Drehzahl der Abtriebswelle (60) und/oder der Planetenräder (18) erfasst und eine Steuerung (80), die von dem Drehzahlabnehmer (70, 70') Signale erhält und die den Torquemotor (20) steuert, umfasst, **dadurch gekennzeichnet, dass** mindestens ein Drehmomentsensor (74) zur Erfassung des Drehmoments MA an der Abtriebswelle (60) vorhanden ist.

2. Stufenloser Fahrzeugantrieb nach Anspruch 1, **dadurch gekennzeichnet, dass** das Außenrad (16) eine Außenverzahnung (17) aufweist, die mit dem Ritzel (24) des Torquemotors gekoppelt ist.

3. Stufenloser Fahrzeugantrieb nach Anspruch 1, **dadurch gekennzeichnet, dass** das Außenrad (16) mittels eines Zahnriemens mit dem Torquemotor (20) zur Drehmomentübertragung verbunden ist.

4. Stufenloser Fahrzeugantrieb (1) nach Anspruch 1, **dadurch gekennzeichnet, dass** der Torquemotor (20) einen Rotor (23) mit einer Dauermagnetanordnung (28) und einen Stator mit einem aktiven Spulensystem (27) besitzt, wobei das Außenrad (16) des Planetengetriebes (10) außenumfänglich eine Dauermagnetanordnung (28) besitzt und den Rotor des Torquemotors (20) bildet.

5. Stufenloser Fahrzeugantrieb nach Anspruch 4, **dadurch gekennzeichnet, dass** der Stator (22) enthaltend das aktive Spulensystem (27) das Planetengetriebe (10) umgebend angeordnet ist.

6. Stufenloser Fahrzeugantrieb nach Anspruch 4, **dadurch gekennzeichnet, dass** der stufenlose Fahrzeugantrieb (1) abtriebsseitig mit einer zusätzlichen Generator-/Motoreinrichtung (61) gekoppelt ist, mittels der ggf. Bremsenergie in eine Batterie oder einen anderen geeigneten elektrischen Speicher speicherbar ist.

7. Stufenloser Fahrzeugantrieb nach einem der vorhergehenden Ansprüche, **dadurch gekennzeichnet, dass** der Antrieb einen Generator (90) aufweist, der elektrische Energie erzeugt, die in den Torquemotor (20) einspeisbar ist.

8. Stufenloser Fahrzeugantrieb nach Anspruch 7, **dadurch gekennzeichnet, dass** der Generator (90) mit der Motorwelle (50) gekoppelt ist.

9. Stufenloser Fahrzeugantrieb nach einem der vorhergehenden Ansprüche, **dadurch gekennzeichnet, dass** der Torquemotor (20) einen Direktantrieb für rotierende Achsen (21) umfassend einen Stator mit aktivem Spulensystem (22) und einen Rotor mit Dauermagnetsystem (23) aufweist.

10. Stufenloser Fahrzeugantrieb nach einem der vorhergehenden Ansprüche, **dadurch gekennzeichnet, dass** der Torquemotor (20) als Außenläufer oder als Innenläufer gestaltet ist.

11. Stufenloser Fahrzeugantrieb nach einem der vorhergehenden Ansprüche, **dadurch gekennzeichnet, dass** die Drehzahl (n) an der Abtriebswelle (60) maximal ist, wenn die Drehzahl (m) am Torquemotor (20) Null ist.

12. Stufenloser Fahrzeugantrieb nach einem der vorhergehenden Ansprüche, **dadurch gekennzeichnet, dass** die Drehzahl (m) des Torquemotors auf einen Wert regelbar ist, bei dem die Drehzahl (n) an der Abtriebswelle gleich Null ist.

13. Verfahren zum Betreiben des stufenlosen Fahrzeugantriebs (1) nach Anspruch 1, wobei das Verfahren die Schritte umfasst:
Blockieren der Abtriebswelle (60), wobei sich die Planetenräder (18) nur um ihre eigene Achse, aber nicht um das Sonnenrad (12) drehen;
Lösen der Blockierung der Abtriebswelle (60), wobei beim Lösen die Drehzahl (m) des Torquemotors (20) so eingestellt ist, dass das Drehmoment (MA) an der Abtriebswelle (60) des Planetengetriebes (10) Null oder näherungsweise Null ist;
Reduzierung der Drehzahl (n) des Torquemotors, wobei durch die Reduzierung der Drehzahl (m) des Torquemotors (20) sich die Planetenräder (18) um das Sonnenrad (12) drehen und an der Abtriebswelle (60) des Planetengetriebes (10) mit fallender Drehzahl (m) ein ansteigendes Drehmoment (MA) erzeugt wird und variieren der Drehzahl (m) des Torquemotors zur Erzeugung einer gewünschten Antriebsdrehzahl (n) oder eines gewünschten Antriebsdrehmomentes (MA).

14. Verfahren nach Anspruch 13, **dadurch gekennzeichnet, dass** zum Erzeugen einer maximalen Drehzahl (nmax) an der Abtriebswelle der Torquemotor (20) gestoppt wird.

## Claims

1. Continuously variable vehicle drive, comprising a planetary gear unit (10) including at least a sun gear (12), a planet carrier (14), an external gear (16) and planet gears (18), an electric motor (20) which is able to generate a driving torque and a braking torque from supplied electricity, a motor shaft (50) serving to supply a driving torque, an output shaft (60) serving for force transmission to downstream units, the output shaft (60) being connected to the planet carrier (14) and the motor shaft (50) being connected to the sun gear (12) and the electric motor (20) being coupled to the external gear (16) for torque transmission, the electric motor being configured as a torque motor, and the continuously variable vehicle drive further comprising a rotational speed pick-up (70, 70') detecting the rotational speed of the output shaft (60) and/or the planet gears (18), and a control unit (80) receiving signals from the rotational speed pick-up (70, 70') and controlling the torque motor (20), **characterised in that** at least one rotational speed sensor (74) for detecting the torque MA on the output shaft (60) is provided.

2. Continuously variable vehicle drive according to claim 1, **characterised in that** the external gear (16) has an external toothing (17) coupled with the pinion (24) of the torque motor.

3. Continuously variable vehicle drive according to claim 1, **characterised in that** the external gear (16) is connected to the torque motor (20) for torque transmission by means of a toothed belt.

4. Continuously variable vehicle drive (1) according to claim 1, **characterised in that** the torque motor (20) comprises a rotor (23) with a permanent magnet assembly (28) and a stator with an active coil system (27), wherein the external gear (16) of the planetary gear unit (10) comprises on its outer circumference a permanent magnet assembly (28) and forms the rotor of the torque motor (20).

5. Continuously variable vehicle drive according to claim 4, **characterised in that** the stator (22) including the active coil system (27) is disposed so as to surround the planetary gear unit (10).

6. Continuously variable vehicle drive according to claim 4, **characterised in that** the continuously variable vehicle drive (1) is coupled, on the output side, with an additional generator/motor device (61) by means of which braking energy can optionally be stored in a battery or other suitable electricity storage means.

7. Continuously variable vehicle drive according to any one of the preceding claims, **characterised in that** the drive comprises a generator (90) generating electrical energy that can be fed into the torque motor (20).

8. Continuously variable vehicle drive according to claim 7, **characterised in that** the generator (90) is coupled to the motor shaft (50).

9. Continuously variable vehicle drive according to any one of the preceding claims, **characterised in that** the torque motor (20) has a direct drive for rotating axes (21) comprising a stator with an active coil system (22) and a rotor with a permanent magnet system (23).

10. Continuously variable vehicle drive according to any one of the preceding claims, **characterised in that** the torque motor (20) is configured as an external rotor motor or an internal rotor motor.

11. Continuously variable vehicle drive according to any one of the preceding claims, **characterised in that** the rotational speed (n) at the output shaft (60) is at its maximum when the rotational speed (m) at the torque motor (20) is zero.

12. Continuously variable vehicle drive according to any one of the preceding claims, **characterised in that** the rotational speed (m) of the torque motor can be adjusted to a value at which the rotational speed (n) at the output shaft equals zero.

13. Method for operating the continuously variable vehicle drive (1) according to claim 1, the method comprising the steps of:
blocking the output shaft (60), wherein the planet gears (18) rotate only about their own axis, but not about the sun gear (12);
releasing the block of the output shaft (60), wherein, while releasing, the rotational speed (m) of the torque motor (20) is adjusted in such a manner that the torque (MA) at the output shaft (60) of the planetary gear unit (10) is zero or approximately zero;
reducing the rotational speed (n) of the torque motor, wherein, due to the reduction of the rotational speed (m) of the torque motor (20), the planet gears (18) rotate about the sun gear (12), and a torque (MA) that rises as the rotational speed (m) falls is generated at the output shaft (60) of the planetary gear unit (10), and varying the rotational speed (m) of the torque motor for generating a desired drive rotational speed (n) or a desired driving torque (MA).

14. Method according to claim 13, **characterised in that** the torque motor (20) is stopped for generating a maximum rotational speed (nmax) on the output shaft.

## Revendications

1. Entraînement de véhicule à variation continue, comprenant une transmission à planétaires (10), qui contient au moins une roue solaire (12), un porte-planétaires (14), une couronne extérieure (16) et des engrenages planétaires (18), un moteur électrique (20), qui est capable d'engendrer à partir de l'électricité appliquée un couple rotatif d'entraînement et un couple rotatif de freinage, un arbre moteur (50) qui sert à appliquer un couple d'entraînement, un arbre de sortie (60) qui sert à la transmission de forces vers des groupes disposés en aval, dans lequel l'arbre de sortie (50) est relié à la roue solaire (12) et, pour la transmission d'un couple de rotation, le moteur électrique (20) est couplé à la couronne extérieure (16), de sorte que le moteur électrique est réalisé sous forme de moteur-couple et l'entraînement de véhicule à variation continue comprend en outre un capteur de vitesse de rotation (70, 70'), qui détecte la vitesse de rotation de l'arbre de sortie (60) et/ou du porte-planétaires (18), et une commande (80), qui reçoit des signaux depuis le capteur de vitesse de rotation (70, 70') et qui commande le moteur-couple (20), **caractérisé en ce qu'**au moins un capteur de couple de rotation (74) est prévu pour détecter le couple de rotation (MA) au niveau de l'arbre de sortie (60).

2. Entraînement de véhicule à variation continue selon la revendication 1, **caractérisé en ce que** la couronne extérieure (16) comprend une denture extérieure (17) qui est accouplée avec le pignon (24) du moteur-couple.

3. Entraînement de véhicule à variation continue selon la revendication 1, **caractérisé en ce que** la couronne extérieure (16) est reliée au moyen d'une courroie dentée avec le moteur-couple (20) pour la transmission d'un couple de rotation.

4. Entraînement de véhicule à variation continue (1) selon la revendication 1, **caractérisé en ce que** le moteur-couple (20) possède un rotor (28) avec un agencement à aimants permanents (28) et un stator avec un système actif de bobines (27), dans lequel la couronne extérieure (16) de la transmission à planétaires (10) possède à la périphérie extérieure un agencement à aimants permanents (28) et forme le rotor du moteur-couple (20).

5. Entraînement de véhicules à variation continue selon la revendication 4, **caractérisée en ce que** le stator (22), y compris le système actif de bobines (27) et agencé de manière à entourer la transmission à planétaires (10).

6. Entraînement de véhicule à variation continue selon la revendication 4, **caractérisé en ce que** l'entraînement de véhicule à variation continue (1) est accouplé, du côté sortie, à un dispositif additionnel générateur/moteur (61) au moyen duquel une éventuelle énergie de freinage peut être accumulée dans une batterie ou dans un autre accumulateur électrique approprié.

7. Entraînement de véhicule à variation continue selon l'une des revendications précédentes, **caractérisé en ce que** l'entraînement comprend un générateur (90) qui engendre une énergie électrique qui peut être injectée dans le moteur-couple (20).

8. Entraînement de véhicule à variation continue selon la revendication 7, **caractérisé en ce que** le générateur (90) est accouplé à l'arbre moteur (50).

9. Entraînement de véhicule à variation continue selon l'une des revendications précédentes, **caractérisé en ce que** le moteur-couple (20), qui comprend un entraînement direct pour des axes en rotation (21), comprend un stator avec un système actif de bobines (22) et un rotor avec un système à aimants permanents (23).

10. Entraînement de véhicule à variation continue selon l'une des revendications précédentes, **caractérisé en ce que** le moteur-couple (20) est conçu comme moteur à rotor extérieur ou à rotor intérieur

11. Entraînement de véhicule à variation continue selon l'une des revendications précédentes, **caractérisé en ce que** la vitesse de rotation (n) au niveau de l'arbre de sortie (60) est maximum quand la vitesse de rotation (m) ou au niveau du moteur-couple (20) est nulle.

12. Entraînement de véhicule à variation continue selon l'une des revendications précédentes, **caractérisé en ce que** la vitesse de rotation (m) du moteur-couple est susceptible d'être régulée à valeur à laquelle la vitesse de rotation (n) au niveau de l'arbre de sortie est égale à zéro.

13. Procédé pour le fonctionnement de l'entraînement de véhicule à variation continue (1) selon la revendication 1, ledit procédé comprenant les étapes suivantes :
blocage de l'arbre de sortie (60), de sorte que les roues de planétaires (18) tournent uniquement autour de leur propre axe, mais non pas autour de la roue solaire (12) ;
annulation du blocage de l'arbre de sortie (60), de sorte que lors de l'annulation la vitesse de rotation (m) du moteur-couple (20) est réglée de telle façon que le couple de rotation (MA) au niveau de l'arbre de sortie (60) de la transmission à planétaires (10) est nul ou approximativement nul ;
réduction de la vitesse de rotation (n) du moteur-couple, de sorte que du fait de la réduction de la vitesse de rotation (m) du moteur-couple (20) les roues de planétaires (18) tournent autour de la roue solaire (18) et cela engendre au niveau de l'arbre de sortie (60) de la transmission à planétaires (10) un couple de rotation (MA) qui augmente alors que la vitesse de rotation (m) diminue, et variation de la vitesse de rotation (m) du moteur-couple pour engendrer une vitesse de rotation d'entraînement (n) désirée ou un couple de rotation d'entraînement (MA) désiré.

14. Procédé selon la revendication 13, **caractérisé en ce que** pour engendrer une vitesse de rotation maximum (nmax) au niveau de l'arbre de sortie, le moteur-couple (20) est arrêté.
